# EUROPÄISCHE PATENTANMELDUNG

(11) **EP 1 100 180 A2**
(43) Veröffentlichungstag der Anmeldung: **16.05.2001**
(21) Anmeldenummer: 00811016.5
(22) Anmeldetag: 01.11.2000
(51) Int. Cl.: H02K 5/08, H02K 9/22

(54) **Elektromotor**

(30) Priorität: 11.11.1999 DE 19954314
(71) Anmelder: HILTI Aktiengesellschaft, 9494 Schaan (LI)
(72) Erfinder: Wissmach, Walter, 80637 München (DE); Kink, Christoph, 86391 Stadtbergen (DE); Mayr, Martin, 85304 Illmünster (DE); Augustin, Johann, 81739 München (DE)
(74) Vertreter: Wildi, Roland

(57) **Zusammenfassung**

Der Elektromotor weist ein Gehäuse (23) auf in dem ein Stator (2) und ein Rotor (1) angeordnet sind. Der gesamte Innenraum des Gehäuses (23), mit Ausnahme einer Statorbohrung (14), die einen Aufnahmebereich für den Rotor (1) bildet, ist mit einer schlagzähen und wärmeleitfähigen Masse (24) ausgegossen. Diese Masse (24) umgibt die Wicklungen des Stators (2) und schützt diese vor Beschädigungen, die insbesondere durch scharfkantiges Schleifgut hervorgerufen werden, das zusammen mit angesaugter Kühlluft den Elektromotor durchströmt. Da die Masse (24) eine sehr gute Wärmeleitfähigkeit hat, wird eine gute Wärmeabfuhr aus dem zentralen Bereich des Elektromotors zum Gehäuse (23) des Elekromotors hin erreicht.

## Beschreibung

Die Erfindung betrifft einen Elektromotor gemäss dem Oberbegriff des Patentanspruchs 1.

Aus der EP 444 908 A1 ist ein Winkelschleifgerät mit einem Gehäuse bekannt, in dem eine Antriebswelle für ein Schleifwerkzeug, ein Winkelgetriebe und ein Elektromotor angeordnet sind. In einem dem Winkelgetriebe zugewandten Bereich ist eine Rotorwelle des Elektromotors mit einem Lüfterrad versehen, mit dessen Hilfe Umgebungsluft in das Gehäuse ansaugbar ist, die zum Kühlen des Elektromotors verwendet wird. Die angesaugte Umgebungsluft wird dabei zwischen dem Rotor und dem Stator des Elektromotors vorbeigeführt und verlässt das Gehäuse erwärmt auf einer dem Winkelgetriebe gegenüberliegenden Endbereich des Gehäuses.

Zusammen mit der Umgebungsluft kann abgetragenes Schleifgut, das zum Teil scharfkantig ausgebildet ist, in den Innenraum des Gehäuses gelangen. Beim Durchströmen des Elektromotors zwischen dem Stator und dem Rotor kann dieses Schleifgut Beschädigungen an der Isolationsschicht hervorrufen, die die einzelnen Wicklungsdrähte der Statorwicklung umgibt, und als Folge davon zu einem Kurzschluss des Elektromotors führen.

Der Erfindung liegt die Aufgabe zugrunde, einen Elektromotor zu schaffen, bei dem die Statorwicklung vor Beschädigungen geschützt ist. Ausserdem soll die im Innern des Elektromotors auftretende Wärme sehr gut zum Gehäuse hin ableitbar und von diesem sehr gut abführbar sein.

Die Lösung dieser Aufgaben erfolgt mit einem Elektromotor, welcher die im kennzeichnenden Abschnitt des Patentanspruchs 1 angeführten Merkmale aufweist.

Bei dem erfindungsgemässen Elektromotor sind die Wicklungen des Stators in der den Innenraum des Gehäuses ausfüllenden Masse eingebettet. Das scharfkantige Schleifgut, das den Elektromotor zwischen dem Stator und dem Rotor durchsetzt, kann auf diese Weise nicht mehr mit den Isolationsschichten der einzelnen Wicklungsdrähte des Stators in Berührung kommen.

Bei Elektromotoren muss darauf geachtet werden, dass diese im Betrieb nicht überhitzen, d.h. im Innenraum darf eine bestimmte Temperatur nicht überschritten werden, da es sonst im Bereich der Wicklung aufgrund der schmelzenden Isolationsschichten zu einem Kurzschluss kommen kann. Die im Elektromotor auftretende Wärme muss daher so schnell wie möglich zum Gehäuse des Elektromotors hin abgeführt werden, das von der Umgebungsluft gekühlt wird. Eine besonders gute Ableitung der im Bereich des Rotors auftretenden Wärme zum Gehäuse des Elektromotors hin wird erreicht, indem vorteilhafterweise die Masse eine Wärmeleitfähigkeit von wenigstens 0,6 W/m²K aufweist.

Bei dem erfindungsgemässen Elektromotor wird die Wandung der Statorbohrung zum Teil von den Statorpolflächen und zum Teil von der eingegossenen, ausgehärteten Masse gebildet. Um insbesondere beim Einsetzen des Rotors in den Stator eine Verletzung jenes Teiles der Wandung, die von der Masse gebildet ist, verhindern zu können, weist die Masse vorzugsweise eine Schlagzähigkeit von wenigstens 40 J/mm²K auf.

Damit der Innenraum, mit Ausnahme der Statorbohrung von der Masse vollständig ausgefüllt werden kann, setzt sich zweckmässigerweise die Masse aus Polyurethan und einem Härter zusammen. Diese beiden voneinander getrennt bevorrateten Komponenten lassen sich zu einer fliessfähigen Masse mischen, die in den Innenraum des Elektromotors gegossen werden kann und dort aushärtet.

Eine besonders gute Kühlung des Elektromotors wird vorteilhafterweise mit wenigstens einem Kühlkanal erreicht, der ausserhalb des Stators in der Masse angeordnet ist. Bei dem Kühlkanal handelt es sich beispielsweise um wenigstens eine Bohrung in der Masse, die sich parallel zur Längsachse der Statorbohrung über die gesamte Länge des Gehäuses erstreckt und mit einer Kühlmittversorgungseinrichtung in Verbindung steht. Die Herstellung dieser Bohrung kann beispielsweise in der gleichen Weise erfolgen wie die Herstellung der Statorbohrung, indem vor dem Ausgiessen des Innenraumes des Gehäuses ein entsprechender Dorn in das Gehäuse eingesetzt und umgossen wird. Nach dem Aushärten der Masse wird dieser Dorn entfernt und übrig bleibt ein im wesentlichen zylindrisch ausgebildeter Hohlraum, durch den Kühlmittel fliessen kann.

Eine weitere Möglichkeit einen Kühlkanal in der Masse ausserhalb des Stators auszubilden besteht darin, den Kühlkanal zweckmässigerweise mit einer, einen Einlass und einen Auslass aufweisenden, Kühlmittelleitung auszubilden, die den Stator wenigstens einmal umgibt und über den Einlass sowie den Auslass mit einer Kühlmittelversorgungseinrichtung in Verbindung steht.

Damit die Wärme von der Masse gut auf die sich in der Kühlmittelleitung befindliche Kühlflüssigkeit übertragen werden kann, besteht zweckmässigerweise die Kühlleitung aus einem wärmeleitfähigen Material, beispielsweise Aluminium oder Kupfer.

Bei dem erfindungsgemässen Elektromotor kann es sich beispielsweise um einen universellen Elektromotor handeln, der einen Stator, einen Rotor, einen Kollektor und Schleifbürsten aufweist. Beim Ausgiessen des Innenraumes mit Masse ist darauf zu achten, dass der Bereich in dem sich die Bürsten befinden ebenfalls nicht ausgegossen wird, damit die Versetzbarkeit der Bürsten in den Bürstenhaltern sowie deren Auswechselbarkeit gewährleistet bleibt. Der erfindungsgemässe Elektromotor kann aber auch ein bürstenloser Elektromotor sein, der einen Stator und einen Rotor aufweist und bei dem die Polarität der einzelnen Statorpole mit einer Steuerelektronik veränderbar ist.

Insbesondere bürstenlose Elektromotoren können durchzugsbelüftet - Umgebungsluft wird zwischen dem Stator und dem Rotor vorbeigeführt - oder gekapselt ausgebildet sein, wobei auch bei gekapselten Elektromotoren ein Lüfterrad auf der Rotorwelle angeordnet sein kann, dass für eine Verwirbelung der Luft im Inneraum des Elektromotors sorgt. Bei durchzugsbelüfteten Elektromotoren erfolgt die Kühlung einerseits über die angesaugte Umgebungsluft, andererseits über die Masse, die die Wärme an das Gehäuse ableitet. Bei gekapselten Elektromotoren erfolgt die Wärmeabfuhr über die Masse mit der die Wärme an das Gehäuse abgeleitet wird und gegebenenfalls über ein Kühlmittel, dass einen Kühlkanal bzw. eine Kühlmittelleitung durchströmt.

Die Erfindung wird anhand von Zeichnungen, die ein Ausführungsbeispiel wiedergeben, näher erläutert. Es zeigen:
- Fig.1: einen Schnitt durch den erfindungsgemässen Elektromotor gemäss Fig. 2; entlang der Linie I-I,
- Fig. 2: einen Schnitt durch den Elektromotor gemäss Fig. 1, entlang der Linie II-II.

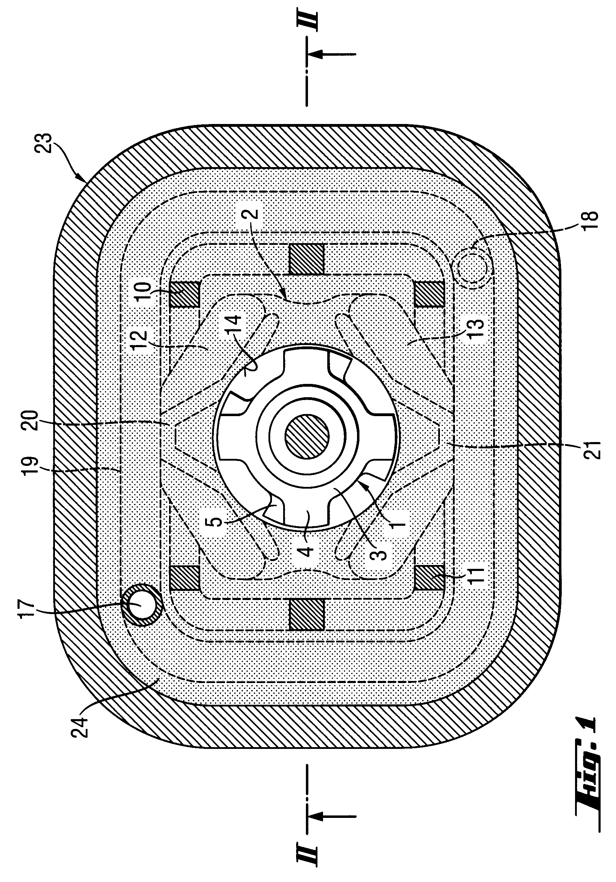

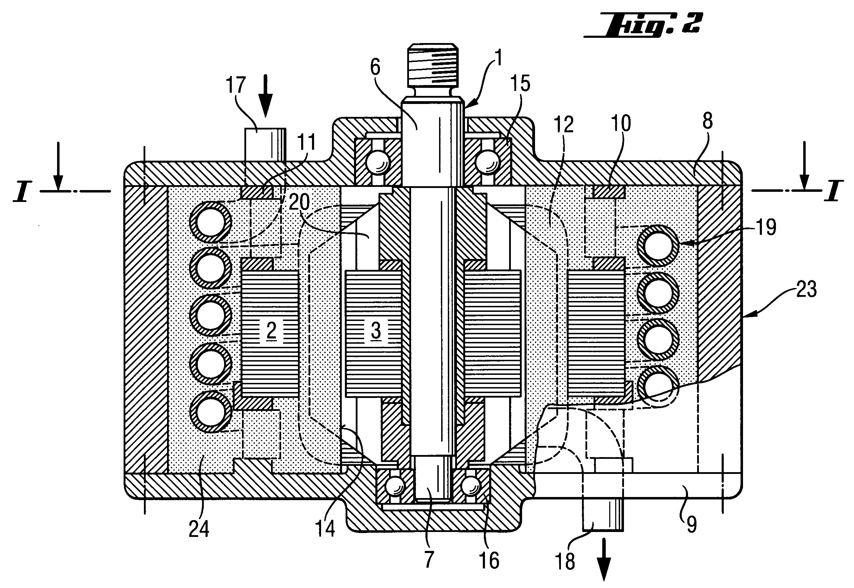

Bei dem in den Fig. 1 und 2 dargestellten Elektromotor handelt es sich um einen bürstenlosen Elektromotor, bei dem die Polarität der einzelnen Pole mit einer nicht dargestellten Steuerelelektronik veränderbar ist. Dieser Elektromotor weist ein Gehäuse 23 auf, das sich aus einem rohrförmigen Aufnahmekörper und zwei Deckel 8, 9 zusammensetzt, mit denen der Aufnahmekörper stirnseitig verschlossen ist. Diese Deckel 8, 9 sind beispielsweise mit nicht näher dargestellten Schraubverbindungen mit dem Aufnahmekörper verbunden. Beide Deckel 8, 9 weisen an einer dem Innern des Gehäuses 23 zugewandten Seite jeweils einen Aufnahmebereich auf, in dem ein Lager 15, 16 angeordnet ist. Beide Lager 15, 16 sind koaxial zueinander angeordnet und werden von einer Rotorwelle durchsetzt, die zwei voneinander beabstandete Lagersitze 6, 7 aufweist. Ein erster Lagersitz 6 wirkt mit einem ersten Lager 15 und ein zweiter Lagersitz 7 wirkt mit einem zweiten Lager 16 zusammen. Einer der beiden Deckel 8 ist mit einer koaxial zum Aufnahmebereich für das erste Lager 15 angeordneten Durchgangsbohrung versehen, durch die die Rotorwelle aus dem Gehäuse 23 ragt. Dieses aus dem Gehäuse 23 ragenden Ende der Rotorwelle ist mit einem Anschlussgewinde versehen, das mit einem anzutreibenden, nicht dargestellen Bauteil in Verbindung bringbar ist. Anstelle dieses An-schlussgewindes, kann die Rotorwelle auch mit einem Ritzel versehen sein.

Im Innern des Gehäuses 23 befindet sich ein im wesentlichen ringförmig ausgebildeter Stator 2 mit einer zentralen Statorbohrung 14 für den Rotor, wobei die Statorbohrung 14 koaxial zur Rotorwelle angeordnet ist. Der Aufnahme und der koaxialen Ausrichtung des Stators 2 dienen beispielsweise zwei, vom zweiten Deckel 9 in das Innere des Gehäuses 23 abragende, Vorsprünge. In axialer Richtung stützt sich der Stator 2 an dem ersten Deckel mit zwei Stützen 10, 11 ab. Sowohl die Vorsprünge als auch die Stützen 10, 11 sind mit wenigstens einer in radialer Richtung verlaufenden Durchgangsbohrung versehen.

Der dargestellte Stator 2 weist beispielsweise zwei einander diametral gegenüberliegende Wicklungen 12, 13 auf, die mit Hilfe von jeweils einer Wickelstütze 20, 21 in einer vorgegebenen Lage gehalten werden. Die Statorbohrung 14 weist einen Durchmesser auf, der grösser ist als der Durchmesser einer nicht dargestellten Hüllkurve, die von Hauptpolen 4 und Nasenpolen 5 der Rotorwelle gebildet wird. Die Rotorwelle weist beispielsweise vier Hauptpole 4 und vier Nasenpole 5 auf, die in einer Umfangsrichtung von den Hauptpolen 4 abragen. Sowohl die Hautpole 4 als auch die Nasenpole 5 sind gleichmässig am Umfang eines Rotorjoches 3 der Rotorwelle angeordnet und ragen in radialer Richtung von diesem ab.

Der Stator 2 ist umgeben von einer Kühlmittelleitung, die den Stator 2 mehrmals umgibt und über einen Einlass 17 und einen Auslass 18 verfügt. Der Einlass 17 durchsetzt den ersten Deckel 8 und überragt die Aussenkontor dieses Deckels 8 in einer parallel zur Rotorwelle verlaufenden Richtung. Der Auslass 18 durchsetzt den zweiten Deckel 9 und überragt die Aussenkontur dieses Deckels 9 in einer vom Einlass 17 abgewandten Richtung. Die Kühlmittelleitung 19 ist aus einem Material gebildet, das sehr wärmeleitfähig ist. Sowohl der Einlass 17 als auch der Auslass 18 können mit einer nicht dargestellten, externen Kühlmittelversorgungseinrichtung in Verbindung stehen.

Der gesamte Innenraum des Gehäuses 23 ist mit Ausnahme der Statorbohrung 14 mit einer aushärtbaren Masse 24 aus Kunststoff ausgegossen, die eine Wärmeleitfähigkeit von wenigstens 0,6 W/m²K besitzt.

Das Gehäuse 23 kann ebenfalls mit wenigstens einem nicht dargestellten Kühlkanal versehen sein, durch den Kühlmittel fliessen kann. Das Gehäuse besteht beispielsweise aus einem Material, das gut wärmeleitfähig ist, z. B. Aluminium.

## Patentansprüche

1. Elektromotor mit einem Gehäuse (23), einem Stator (2) und einem Rotor (1), **dadurch gekennzeichnet,** dass der gesamte Innenraum des Gehäuses (23), mit Ausnahme der Statorbohrung (14) für den Rotor (1), mit einer aushärtbaren Masse (24) aus Kunststoff ausgegossen ist.

2. Elektromotor nach Anspruch 1, dadurch gekennzeichnet, dass die Masse (24) eine Wärmeleitfähigkeit von wenigstens 0,6 W/m²K besitzt.

3. Elektromotor nach Anspruch 1 oder 2, dadurch gekennzeichnet, dass die Masse (24) eine Schlagzähigkeit von wenigstens 40 J/mm² aufweist.

4. Elektromotor nach einem der Ansprüche 1 bis 3, dadurch gekennzeichnet, dass sich die Masse (23) aus Polyurethan und einem Härter zusammensetzt.

5. Elektromotor nach einem der Ansprüche 1 bis 4, dadurch gekennzeichnet, dass in der Masse (24), ausserhalb des Stators (2), wenigstens ein Kühlkanal angeordnet ist.

6. Elektromotor nach Anspruch 5, dadurch gekennzeichnet, dass der Kühlkanal von einer den Stator (2) umgebenden Kühlmittelleitung (19) gebildet ist.

7. Elektromotor nach Anspruch 6, dadurch gekennzeichnet, dass die Kühlmittelleitung (19) aus einem wärmeleitfähigen Material besteht.
